(19) Europäisches Patentamt
European Patent Office
Office européen des brevets

(11) EP 0 519 921 B1

(12) **EUROPEAN PATENT SPECIFICATION**

(45) Date of publication and mention of the grant of the patent:
**21.08.1996 Bulletin 1996/34**

(21) Application number: **90911047.0**

(22) Date of filing: **13.07.1990**

(51) Int Cl.[6]: **G02F 1/15**

(86) International application number:
**PCT/US90/03873**

(87) International publication number:
**WO 91/01510 (07.02.1991 Gazette 1991/04)**

(54) **Electrochromic element, materials for use in such element, processes for making such element and such materials and use of such element in an electrochromic glass device**

Elektrochromes Element, Materialien zur Verwendung in einem solchen Element, Herstellungsverfahren eines derartigen Elementes sowie derartiger Materialien und die Verwendung eines solchem Elementes in einem elektrochromen Gerät

Elément électrochromique, matériaux utilisés dans un tel élément, procédé de production d'un tel élément et de tels matériaux et utilisation d'un tel élément dans un dispositif électrochromique

(84) Designated Contracting States:
**AT BE CH DE DK ES FR GB IT LI LU NL SE**

(30) Priority: **13.07.1989 US 379225**

(43) Date of publication of application:
**30.12.1992 Bulletin 1992/53**

(60) Divisional application: **96100846.3**

(73) Proprietors:
- **ELF ATOCHEM NORTH AMERICA, INC.**
  **Philadelphia Pennsylvania 19102-3222 (US)**
- **SOCIETE NATIONALE ELF AQUITAINE**
  **F-92078 Paris la Défense Cédex 45 (FR)**

(72) Inventors:
- **COUPUT, Jean-Paul**
  **F-64320 Bizanos (FR)**
- **CAMPET, Guy**
  **F-33610 Canejan (FR)**
- **CHABAGNO, Jean, Michel**
  **F-64000 Pau (FR)**
- **MULLER, Daniel**
  **F-64000 Pau (FR)**
- **BOURREL, Maurice**
  **F-64000 Pau (FR)**
- **DIRKX, Ryan, R.**
  **Belle Mead, NJ 08502 (US)**
- **FERRY, Didier**
  **F-64170 Artix (FR)**
- **GARIE, Régine**
  **F-42000 S.-Etienne (FR)**
- **DELMAS, Claude**
  **F-33400 Talence (FR)**
- **GEOFFROY, Catherine**
  **F-92700 Colombes (FR)**
- **MOREL, Bertrand**
  **F-64000 Pau (FR)**
- **SALARDENNE, Jean**
  **F-33600 Pessac (FR)**
- **PORTIER, Josik**
  **F-33170 Gradignan (FR)**

(74) Representative: **Grünecker, Kinkeldey,**
**Stockmair & Schwanhäusser Anwaltssozietät**
**Maximilianstrasse 58**
**80538 München (DE)**

(56) References cited:

| | |
|---|---|
| **EP-A- 0 241 217** | **DE-A- 2 735 360** |
| **JP-A-61 277 927** | **US-A- 4 193 670** |
| **US-A- 4 573 768** | **US-A- 4 578 326** |
| **US-A- 4 605 285** | **US-A- 4 752 544** |
| **US-A- 4 851 307** | **US-A- 4 878 743** |
| **US-A- 4 911 995** | |

- **CHIMICA OGGI June 1989, Italy, pp. 41-45; B. SCROSATI : "Electrochromism and elecrochromic devices"**
- **SPIE, vol. 428, 1983, pp. 38-44; R.B. GOLDNER : "Electrochromic materials for controlled radiant energy transfer in buildings"**
- **SPIE, vol. 692, 1986, pp. 32-38; S.F. COGAN et al.: "Optical switching in "complementary" electrochromic windows"**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 519 921 B1

## Description

### Background of the Invention

The present invention relates to electrochromic elements, and more particularly to laminated electrochromic glass devices and processes for making such devices.

Electrochromic materials generally are materials which change color upon application of electrical current to induce an electrochemical reaction in the material.

Electrochromic devices are known which comprise a laminated structure including an electrolyte ion conducting layer sandwiched between an electrochromic layer and a counter electrode layer, all sandwiched between a pair of conductive electrodes composed of, for example, indium-tin oxide.

Many of the prior art electrochromic elements utilize $WO_3$ as the electrochromic color-forming layer. It is known that $WO_3$ changes from a clear, transparent state to a colored state upon undergoing the reaction:

$$\underset{\text{(clear)}}{WO_3 + Z^+ + e^-} \longrightarrow \underset{\text{(colored)}}{Z^+WO_3^-}$$

wherein Z is selected from H or alkali metals such as Li or Na.

It is also known from the nonaqueous secondary battery art that various other metals will display electrochromic properties when changing from one valence state to another. Specifically, it is known that some transition metals exhibit electrochromic properties when moving between the +2 and +3 valence states and other transition metals exhibit such properties when changing between the +3 and +4 valence states.

Heretofore, the art has had difficulty utilizing the electrochromic properties of $WO_3$ in combination with the electrochromic properties of these other known transition metal oxides. For example, it is disclosed by U.S. Patent No. 4,750,816 that "oxidatively color-forming materials suitable as opposing electrodes of reductive color-forming layers comprising $WO_3$, etc. are not found in inorganic materials." (Column 1, lines 42-45). This is due to several factors, such as the difficulty in discovering oxidative color-forming materials which (1) have a high enough ion exchange capacity; (2) exhibit an adequate transparency or, even better, exhibit color changes complementary to those of $WO_3$; and (3) have a range of working potential compatible with that of the other materials in the electrochromic element.

The term "complementary" color changes, as used herein, means exhibiting opposite color-forming tendencies upon the insertion of an ion. $WO_3$ colors when an ion is inserted therein and thus materials "complementary" to $WO_3$ would bleach upon ion insertion. Thus, an electrochromic element utilizing a layer of $WO_3$ along with a layer of a material having a complementary color change to $WO_3$ would have two bleached electrochromic layers when an ion was inserted into the complementary layer and two colored layers when an ion was inserted into the $WO_3$ layer. This would enable an additive color effect to be attained.

Because of the aforementioned difficulties, prior art electrochromic devices tended to utilize either a single electrochromic layer of $WO_3$ or other electrochromic material to produce the desired electrochromic color change effect, or utilized either an inorganic compound which undergoes little or no color change upon ion insertion and removal or an organic compound as the opposing or counter electrode to the $WO_3$ layer. The use of a single electrochromic layer of $WO_3$ or a layer of $WO_3$ in conjunction with a counter electrode which remains transparent upon ion insertion and removal, suffers from the disadvantage that the difference in the amount of light that is transmitted through the layer in the clear and colored states is limited by the extent of color change of the $WO_3$ material. In addition, electrochromic devices utilizing an organic electrochromic layer suffer from the disadvantage that these layers are unstable over long periods of time and thus their long term color-forming durability is questionable.

It is an object of the present invention to provide a novel electrochromic element.

It is another object of the present invention to provide a novel electrochromic glass device.

It is another object of the present invention to provide an electrochromic element which is characterized by having a large difference between the percentage of visible light transmitted by the element in the colored state and the percentage of visible light transmitted by the element in the bleached state.

It is another object of the present invention to provide an electrochromic element which is characterized by having a large difference between the percentage of radiant heat transmitted by the element in the colored state and the percentage of radiant heat transmitted by the element in the bleached state.

It is another object of the present invention to provide an electrochromic element whose color-forming properties exhibit excellent long term durability.

It is another object of the present invention to provide an electrochromic element characterized by having an excellent response time, i.e., the period of time to change between the bleached state and the colored state is low.

It is another object of the invention to provide an electrochromic element that can operate effectively over a wide

range of temperatures.

It is a further object of the invention to provide an electrochromic element that does not utilize toxic or corrosive materials.

An electrochromic element according to the invention is defined in claim 1. Further, an electrochromic device comprising the electrochromic element according to the invention is defined in claim 14. Claim 21 and 23 each defines a method of manufacturing the electrochromic device of the invention.

Additional objects and advantages of the invention will be set forth in part in the description which follows, and in part will be obvious from the description, or may be learned by practice of the invention.

The accompanying drawings, which are incorporated in and constitute a part of this specification, illustrate preferred embodiments of the invention and together with the detailed description of the preferred embodiments herein, serve to explain the principles of the invention.

## Brief Description of the Drawings

Fig. 1 is a sectional view showing a construction of one embodiment of the laminate electrochromic device of the present invention.

Fig. 2 is a sectional view showing a construction of a second embodiment of the laminate electrochromic device of the invention.

## Description of the Preferred Embodiments

Reference will now be made in detail to the present preferred embodiments of the invention, examples of which are illustrated in the accompanying drawings.

In accordance with the present invention, there is provided an electrochromic element comprising a pair of electrodes at least one of which is transparent, first and second inorganic electrochromic layers interposed between the pair of conductive electrodes and an ion conducting layer of an electrolyte interposed between the first and second inorganic electrochromic layers. The second inorganic electrochromic layer is amorphous. As used herein, the term amorphous means amorphous to X-rays. The first inorganic electrochromic layer can be amorphous or crystalline. The first and second inorganic electrochromic layers are different and are capable of exhibiting electrochromic properties upon the incorporation of an ion of an element selected from H, Li, Na, K, Ag, Cu and Tl. The electrochromic properties of the first and second inorganic electrochromic layers are complementary. As embodied in Fig. 1, electrochromic element 10 comprises a pair of conductive electrodes 12 and 14. Conductive electrodes 12 and 14 may both be transparent or one may be transparent and the other reflective.

In a preferred embodiment of the invention, electrochromic element 10 is utilized in an electrochromic glass device. In such an embodiment, conductive electrodes 12 and 14 are both transparent and are formed on two substrates 22 and 24, which are preferably transparent and are made of, for example, glass or plastic. Conductive electrodes 12 and 14 may be any of those materials known in the art to be useful as transparent conductive electrodes and are preferably composed of indium tin oxide, which is a composition of $In_2O_3$ containing 5 wt.% of $SnO_2$, or fluorine doped tin oxide ($SnO_2$:F). When utilizing indium tin oxide as conductive electrodes 12 and 14, the indium tin oxide is preferably deposited on float glass. Pyrrolytic glass ($SnO_2$:F) as supplied by the glass industry may also be utilized, which would function as both conductive electrodes 12 and 14 and substrates 22 and 24.

In another embodiment of the invention, electrochromic element 10 is utilized in a mirror. In such an embodiment, one of conductive electrodes 12 and 14 is reflective and the other is transparent. The conductive electrode 12 or 14 that is reflective may be any of those materials known in the art to be useful as reflective conductive electrodes, such as Al, Au or Ag.

In accordance with the present invention as embodied in Fig. 1, first inorganic electrochromic layer 16 and second inorganic electrochromic layer 18 are interposed between conductive electrodes 12 and 14. First inorganic electrochromic layer 16 preferably comprises $WO_3$. $WO_3$ is bleached in its normal state and is thus transparent. However, the compound $WO_3$ has the property that it exhibits a colored state when ions such as $Li^+$ are incorporated therein. First inorganic electrochromic layer 16 may alternatively comprise $TiO_2$ or $MoO_3$, or any of those compounds known in the art that are bleached in the normal state and colored when ions such as $H^+$, $Li^+$, $Na^+$, $K^+$, $Ag^+$, $Cu^+$, and $Tl^+$ are incorporated therein.

In accordance with the invention, first inorganic electrochromic layer 16 may be produced by sputtering a tungsten target to form a film of $WO_3$ or alternatively, the film of $WO_3$ may be electrochemically processed.

In accordance with the invention, second inorganic electrochromic layer 18 preferably comprises a fourth period transition element chalconide or halide having the property of exhibiting a color change when shifting between the +2 to +3, or between the +3 and +4 valence states.

The fourth period tradition metal can be Ni, Co, Mn, Cr, V, Ti or Fe. The chalconide or halide can be O, S, F or Cl.

The composition of second inorganic electrochromic layer 18 can be represented by the formula $M_xT^n{}_yT^{n+m}{}_{(uz-ny-x)/(n+m)}X^u{}_z$. T is a transition element of the fourth period of the periodic table which can be Ni, Co, Mn, Cr, V, Ti or Fe, and M is at least one element selected from H, Li, Na, K, Ag, Cu and Tl. Preferably, M is Li. X can be O, S, F or Cl. Preferably, X is O. n, n+m and u represent oxidation numbers. x represents the moles of $M^+$ ions that are incorporated into second inorganic electrochromic layer 18. y represents the moles of T at the oxidation number n and z is the moles of x. x, y, z, u $\geq$ 0, $2 \leq n \leq 3$, $1 \leq m \leq 2$, $n+m \leq 4$.

In accordance with the invention, Li, Na, K, Ag, Cu or Tl ions can be incorporated into first and second inorganic electrochromic layers 16 and 18 without any incorporation of $H^+$ ions. However, during assembly of electrochromic element 10, it is possible that some amount of water may enter the system. The presence of water in the electrochromic system may cause certain amounts of $H^+$ ions to be formed which will inevitably become incorporated into first and second inorganic electrochromic layers 16 and 18 along with $Li^+$, $Na^+$, $K^+$, $Ag^+$, $Cu^+$ or $Tl^+$ ions. The presence of $H^+$ ions in the system can cause problems in that $WO_3$ degrades in the presence of $H_2O$, which may be formed as a by-product. In addition, $H_2$ gas may be formed as a by-product from $H^+$ ions and can cause bubble formation (often called "outgassing"). On the other hand, $H^+$ ions are smaller than $Li^+$, $Na^+$, $K^+$, $Ag^+$, $Cu^+$ or $Tl^+$ ions and thus are more mobile which results in faster incorporation and extraction from first and second inorganic electrochromic layers 16 and 18. A mixture of Li, Na, K, Ag, Cu or Tl and hydrogen ions incorporated into first and second inorganic electrochromic layers 16 and 18 will have some of the characteristics of both $H^+$ incorporation and non-hydrogen $M^+$ incorporation.

Preferably, the first inorganic electrochromic layer comprises $WO_3$, and $M^+$ ions are capable of being inserted from said ion conducting layer to said first inorganic electrochromic layer to form the composition $M_tWO_3$, which is colored, wherein $0 \leq t \leq 1$ and t is moles of M.

The electrochromic element of the invention utilizing the above amorphous electrochromic material as the second inorganic electrochromic layer is capable of exhibiting a first color state wherein the first inorganic electrochromic layer is bleached and has the composition $WO_3$ and the second inorganic electrochromic layer is bleached and has the composition $M_xT_y{}^nX_z{}^u$, and a second color state wherein the first inorganic electrochromic layer is colored and has the composition $M_{\Delta x}WO_3$ and the second inorganic electrochromic layer is colored and has the composition $M_{x-\Delta x}T^n{}_{y-\Delta x/m}T^{n+m}{}_{\Delta x/m}X^u{}_z$. The first color state has a maximum transmissivity and the second color state has a less than maximum transmissivity. The formula $M_xT_y{}^nT^{n+m}{}_{(uz-ny-x)/(n+m)}X^u{}_z$ represents intermediate insertion states.

In accordance with the invention, second inorganic electrochromic layer 18 may be produced by an electrochemical method of first sputtering a target comprised of a transition metal T with a plasma of $O_2/H_2$ to form an original thin film layer consisting essentially of a mixture of TO, $T(OH)_2$ and TOOH. This original layer is then preferably electrochemically processed in an alkali metal hydroxide solution, for instance NaOH, 1N solution, wherein the original layer is the cathode and the anode is a platinum electrode. This electrochemical step yields a layer consisting essentially of TO and TOOH. The resulting layer is then electrochemically processed in a liquid electrolyte solution with one electrode consisting of the TO/TOOH mixture with an opposing lithium electrode. The liquid electrolyte may comprise an ionizable salt MZ and a polar solvent of this salt, such as propylene carbonate and $(C_2H_5)_2NSO_2N(C_2H_5)_2$, wherein M is as defined earlier herein and Z is a strong acid anion selected from $ClO_4^-$, $CF_3SO_3^-$ and $N(CF_3SO_2)_2^-$. The electrochemical reaction that takes place causes a particular mole fraction of $M^+$ ions, designated herein as x, to become incorporated into the layer in a first stage. This electrochemical reaction is designated by the following equation:

$$[(1-2x)TO,2xTOOH]+xM^+ +xe^- \rightarrow [(1-2x)TO,xMTO_2,xHTOOH]$$

While not intending to be bound by any theory of how the invention works, applicants believe that the H atoms in TOOH are loosely attached and may migrate into the interior of the layer. It is believed that, in a first stage, some amount of $M^+$ ions are immediately incorporated into the electrochromic layer and a solid solution is spontaneously formed which comprises M,$T^n$,$T^{n+m}$ and O. This first stage incorporation of $M^+$ ions is partially irreversible.

In addition to the $M^+$ ions that can be incorporated into the electrochromic layer in a first stage, an additional amount of $M^+$ ions can be incorporated into the electrochromic layer in a second stage. This second state incorporation is reversible, which enables the ions to be inserted and removed from the layer.

Said $M^+$ ions can be inserted into said second inorganic electrochromic layer by applying a voltage differential between said pair of conductive electrodes. Further, said $M^+$ ions can be inserted into said first inorganic electrochromic layer by applying a voltage differential between said pair of conductive electrodes.

The present invention utilizes the property of transition elements such as Ni, Co, Mn, V and Fe that undergo a color change when moving between the +2 and +3 valence states and the property of transition elements such as Fe, Ti and Cr that undergo a color change when moving between the +3 and +4 valence states. Generally, Ni, Co, Mn, and V are colored in the +3 valence state and bleached (less colored in the case of Co) in the +2 valence state. Cr and Fe are generally bleached in the +3 state and colored in the +4 state. Ti generally exhibits only a small color change when moving between the +3 and +4 valence states and thus Ti based compounds could also be utilized as first inorganic electrochromic layer 16.

In accordance with the invention, an alternative method for producing second inorganic electrochromic layer 18 is

a physical preparation which comprises a first step of sputtering a target of $M_{\alpha}T_{1-\alpha}O$, wherein $O<\alpha\leq1.0$ and w represents mole fraction, to form a thin film which comprises M, $T^n$, $T^{n+m}$ and O; and a second step of electrochemically processing the thin film in a liquid electrolyte comprising a polar solvent selected from propylene carbonate and $(C_2H_5)_2NSO_2N(C_2H_5)_2$ and an ionizable salt MZ, wherein M is an element selected from H, Li, Na, K, Ag, Cu and Tl and Z is a strong acid anion selected from $ClO_4^-$, $CF_3SO_3^-$ and $N(CF_3SO_2)_2^-$, to incorporate $xM^+$ ions into the thin film to form the electrochromic material having the composition $M_xT^n_yT^{n+m}_{(2z-ny-x)/(n+m)}O_z$.

In accordance with the invention, an alternative method for producing either first or second inorganic electrochromic layers 16 or 18 is a method that consists of chemically inserting atoms such as lithium or silver atoms into either layer. This chemical insertion can be achieved by using alkali metal active organic solutions similar to those utilized to intercalate $Li^+$ ions in various host structures. (See French Patent No. 2,569,058). This method overcomes the potential problem of $H^+$ contamination since protons are incapable of co-existing with Li, Na, K, Ag, Cu or Tl in these solutions.

In accordance with the invention, an amorphous inorganic electrochromic material can be produced by inserting and extracting lithium ions prior to assembling the device without the use of any liquid electrolyte. This "solid state" process enables an amount of ions to be inserted in addition to the amount inserted into the deposited films. It has been found that this process provides the following advantages: improved reversibility of ion exchange; avoidance of liquid electrolyte diffusion into the other layers of the device; and capability of cycling the device at elevated temperatures which reduces the processing time and stabilizes the layers.

In accordance with the invention, the "solid state" process for forming the electrochromic layer comprises forming an "electrochromic layer laminate" which consists of: substrate/transparent conductive electrode/electrochromic layer/solid polymer electrolyte (SPE). The solid polymer electrolyte may be crosslinked and should be a material that is conductive to $Li^+$. A lithium electrode on a substrate is then placed into juxtaposition with the electrochromic layer laminate. This can be accomplished by: (1) applying a lithium foil to the electrolyte layer of the electrochromic layer laminate; (2) forming a solid polymer electrolyte/lithium/substrate laminate ("lithium laminate") and contacting the SPE of the electrochromic layer laminate with the SPE of the lithium laminate under pressure in a vacuum; or (3) forming a lithium laminate and adhering the SPE of the lithium laminate with the SPE of the electrochromic layer laminate with a small amount of additional SPE acting as a crosslinkable adhesive.

The resulting device, which consists of substrate/transparent conductive electrode/electrochromic layer/SPE/lithium/substrate, is then "cycled" by application of a voltage differential to first insert and then remove $Li^+$ from the electrochromic layer. The SPE/lithium electrode/substrate can then be removed by, for example, peeling away. The remaining substrate/conductive electrode/electrochromic layer can then be assembled in a final electrochromic device.

It has been discovered by the present inventors that, although it may be advantageous in many cases to insert and remove ions from the inorganic electrochromic material prior to assembling the electrochromic device, it may not always be necessary to do so. Thus, it may be advantageous in some cases to assemble the electrochromic device of the invention without any electrochemical processing of the inorganic electrochromic layers. However, it is preferred that at least one of said amorphous inorganic electrochromic material and said first inorganic electrochromic material is electrochemically processed prior to asembling the polymeric electrolyte layer between the sputtered sides of said substrates.

In accordance with the invention, second inorganic electrochromic layer 18 is amorphous rather than crystalline or polycrystalline. Some crystalline materials are capable of reversibly intercalating $M^+$ ions. These materials are believed to have a long range tunnel-like or leaflet-like crystal order, at least along one direction. However, such structures are very difficult to obtain in thin films by known techniques. Presently available techniques for producing thin films yield, at best, polycrystalline structures, i.e., materials having crystalline domains that are randomly connected. Polycrystalline structures have intercalation properties (exchange capacity and kinetics) that are significantly inferior to those of monocrystals. This is believed to be due to the fact that the crystallites are randomly oriented and thus there is no continuity of tunnels from one grain to the other. As a result, potential barriers to ion migration exist at the boundaries between crystallites.

The process of the present invention, on the other hand, can produce thin films that are amorphous and thus are capable of very high exchange capacities and superior kinetics, as compared to polycrystalline materials. Performance of the amorphous thin films of the present invention actually approaches that of monocrystals.

In accordance with the present invention as embodied in Fig. 1, ion conducting layer 20 is interposed between first and second inorganic electrochromic layers 16 and 18. Ion conducting layer 20 preferably consists of a solid polymeric electrolyte, which is an amorphous solid solution comprising a copolymer of ethylene oxide and methyl glycidyl ether and at least one ionizable salt. Alternatively, the copolymer may be ethylene oxide and butylene oxide. The preferred proportions of the copolymer are 75% ethylene oxide and 25% methyl glycidyl ether or butylene oxide. In addition, a small amount of allyl glycidyl ether (5%) may be included in the copolymer. The molecular weight of the copolymer preferably ranges between 30,000 and 2,000,000. The ionizable salt utilized in conjunction with the solid copolymer, can be a mixture of $MClO_4$ and $MN(CF_3SO_2)_2$ or can consist entirely of $MN(CF_3SO_2)_2$, wherein M is selected from H, Li, Na, K, Ag, Cu or Tl, and is preferably Li. The solid polymeric electrolyte may also include a plasticizer such

as $(C_2H_5)_2NSO_2N(C_2H_5)_2$. (See French Patent No. 2,606,216).

In accordance with an alternative embodiment of the invention, ion conducting layer 20 may comprise a polyurethane made by reacting triisocyanates with the above-mentioned copolymers having a low molecular weight (1,000-20,000) along with at least one of the above-mentioned ionizable salts. Such a polyurethane network utilized in ion conducting layer 20 chemically crosslinks and hardens at temperatures near room temperature.

The basic chemical reaction is:

$$ROH + R'NCO \longrightarrow R'NH-\underset{\underset{O}{\|}}{C}-OR$$

These polyurethane networks have the advantage of nearly perfect optical transparency.

One important factor which can cause "haze" problems in electrochromic elements is the crystallization of the ion conducting layer. The solid polymeric electrolyte of the invention comprising a copolymer of ethylene oxide and methyl glycidyl ether or butylene oxide along with at least one ionizable salt and the solid polymeric electrolyte comprising a polyurethane gel and at least one ionizable salt each provides an efficient layer for conducting ions between first and second inorganic electrochromic layers 16 and 18 without significant crystallization of the solid polymer electrolyte, i. e., the solid polymer electrolyte remains amorphous. In addition, the copolymer including butylene oxide has the advantage of being less hydrophilic.

The ion conducting macromolecular material used in the present invention exhibits an ionic conductivity at least equal to $10^{-7}$ siemens/cm at room temperature and an electronic conductivity lower than $10^{-10}$ siemens/cm.

In particular, the ion conducting macromolecular material comprises a solid solution of said at least one ionizable salt, particularly a lithium salt, in a plastic polymeric material which can comprise at least one copolymer of ethylene oxide and of another cyclic oxide as disclosed in claim 1, said copolymer having either the structure of a statistical copolymer (U.S. Patent No. 4,578,326) which may be crosslinked (French Patent No. 2,570,224) or the form of a polyurethane network resulting from the reaction of a sequenced copolymer of ethylene oxide and another cyclic oxide with a coupling agent consisting of an organic triisocyanate (French Patent No. 2,485,274). Moreover, the ionizable salts mentioned in European Patent Application No. 0013199 can be replaced in whole or in part by ionizable salts such as alkali metal closoboranes (French Patent No. 2,523,770), alkali metal tetrakis-trialkylsiloxyalanates (French Patent No. 2,527,611), alkali metal bis(perhalogenoalkylsulfonyl)imidides or bis(perhalogenoacyl)imidides (French Patent No. 2,527,602), alkali metal tetraalkynylborates or aluminates (French Patent No. 2,527,610), alkali metal derivatives of perhalogenoalkylsulfonylmethane or perhalogenoacetylmethane (French Patent No. 2,606,218), or alkali metal salts of polyethoxylated anions (European Patent Application No. 0,213,985).

In a preferred embodiment of the present invention, electrochromic element 10 is interposed between a pair of glass or plastic substrates 22 and 24. Such an arrangement forms an electrochromic device. The electrochromic device can be manufactured by sputtering on a glass or plastic substrate 22 or 24, conductive electrode 12 which may be composed of indium-tin oxide or fluorine doped tin oxide ($SnO_2$:F). First inorganic electrochromic layer 16 is then sputtered onto conductive electrode 12. On a second glass or plastic substrate 22 or 24, conductive electrode 14 is sputtered, and second inorganic electrochromic layer 18 is sputtered onto conductive electrode 14. The two sputtered glass substrates are then assembled with ion conducting layer 20, which may be a solid polymeric electrolyte, interposed therebetween.

In accordance with the invention, it should also be possible to manufacture electrochromic element 10 by depositing all of the active layers, i.e., conductive electrodes 12 and 14, first and second inorganic electrochromic layers 16 and 18 and ion conducting layer 20 in the form of a gel. (See Solid State Ionics 28-30 (1988)-1722).

In accordance with the invention, $M^+$ ions can be incorporated into first inorganic electrochromic layer 16 prior to being assembled in the electrochromic element 10. Alternatively, $M^+$ ions can be incorporated into second inorganic electrochromic layer 18 prior to assembly into the electrochromic device. In either case, the application of a voltage differential between conductive electrodes 12 and 14 will cause the $M^+$ ion to move out of one inorganic electrochromic layer 16 or 18, through ion conducting layer 20 and into the other inorganic electrochromic layer 16 or 18, thereby causing each of first and second inorganic electrochromic layers 16 and 18 to become either bleached or colored.

In accordance with the invention, the voltage differential between conductive electrodes 12 and 14 sufficient to cause $M^+$ ions to be incorporated into either first or second inorganic electrochromic layers 16 and 18 is less than or equal to 3.5 volts vs. Li. This makes first and second inorganic electrochromic layers 16 and 18 compatible with ion conducting layer 20 when utilizing a solid polymeric electrolyte containing a lithium salt which will decompose at potentials greater than or equal to 3.5 volts vs. Li.

In an alternative embodiment of the invention, as embodied in Fig. 2, electrochromic element 28 comprises:

a first transparent conductive electrode 30 which may be indium tin oxide or fluorine doped tin oxide;
first inorganic electrochromic layer 32 which may be $WO_3$, $MoO_3$ or $TiO_2$;

first ion conducting layer of an electrolyte 34 which may be a solid polymeric electrolyte comprising a terpolymer of ethylene oxide, butylene oxide and allyl glycidyl ether and at least one ionizable salt or may be a solid polymeric electrolyte comprising a polyurethane gel and at least one ionizable salt;
first amorphous inorganic electrochromic counter-electrode layer 36 which may be the same transition element compounds as disclosed earlier for second inorganic electrochromic layer 18 of Fig. 1;
second transparent conductive electrode 38 which may be indium tin oxide or fluorine doped tin oxide;
transparent substrate 40 which may be glass or a plastic;
third transparent conductive electrode 42 which may be indium tin oxide or fluorine doped tin oxide;
second amorphous inorganic electrochromic counter-electrode layer 44 which may be the same transition element compounds as disclosed earlier for second inorganic electrochromic layer 18 of Fig. 1;
second ion conducting layer of an electrolyte 46 which may be the same materials as for layer 34;
second inorganic electrochromic layer 48 which may be $WO_3$, $MoO_3$ or $TiO_2$;
and fourth conductive electrode 50 which may be transparent or reflective.

First and second inorganic electrochromic layers 32 and 48 are preferably different from first and second amorphous inorganic electrochromic counter-electrode layers 36 and 44. First and second inorganic electrochromic layers 32 and 48 and first and second amorphous inorganic electrochromic counter-electrode layers 36 and 44 are preferably capable of exhibiting electrochromic properties upon the incorporation of an ion such as those mentioned earlier herein. The electrochromic properties of first and second inorganic electrochromic layers 32 and 48 are preferably complementary to the electrochromic properties of first and second amorphous inorganic electrochromic counter-electrode layers 36 and 44. Within the scope of the present invention, electrochromic element 28 may be interposed between two layers of transparent substrate materials 22 and 24, such as glass or plastic in order to form an electrochromic device. Generally, an electrochromic device is provided by the present invention which comprises a plurality of five-layerd electrochromic elements according to the present invention positioned in juxtaposed surface to surface relation with one another, each pair of five-layered elements separated by a substrate layer.

In accordance with the invention, electrochromic element 28 can be manufactured by sputtering a layer of a conductive electrode material on a first transparent substrate 22 or 24 to form first transparent conductive electrode 30 followed by sputtering a layer of a first inorganic electrochromic material onto first transparent conductive electrode 30 to form first inorganic electrochromic layer 32. Similarly, fourth conductive electrode 50 and second inorganic electrochromic layer 48 can be formed on a second glass substrate 22 or 24. A third glass substrate 40 can be sputtered with second transparent conductive electrode 38 and first amorphous inorganic electrochromic counter-electrode layer 36 on one side and sputtered with third transparent conductive electrode 42 and second amorphous inorganic electrochromic counter-electrode layer 44 on the other side. First ion conducting layer of an electrolyte 34 can be assembled between the sputtered side of first glass substrate 22 or 24 and either side of third glass substrate 40. Second ion conducting layer of an electrolyte 46 can then be assembled between the sputtered side of second glass substrate 22 or 24 and the other side of third glass substrate 40 to form electrochromic element 28.

The electrochromic element of the present invention utilizing Ni as the transition metal in second inorganic electrochromic layer 18 and Li ions as the insertion ions has achieved an ion exchange of 20-25 $mC/cm^2$. The electrochromic element of the present invention has been shown to be durable over more than 10,000 cycles in severe conditions while achieving complete bleaching and coloration at each cycle. Changes in transmissivity of the electrochromic element of the invention have been achieved ranging from 30-35% to approximately 85% of visible transmitted light when utilizing the element of Fig. 1 and also lower ranges have been achieved ranging from 3-5% to 55-60% of visible transmitted light when utilizing the element of Fig. 2. The switching time of the electrochromic element of the invention, i.e., the time to go from the colored state to the bleached state is in the range of 1-10 minutes.

The following Examples are provided to illustrate the present invention and some of its advantages. The Examples are not intended to limit the invention.

## EXAMPLE 1

## MANUFACTURE OF A SOLID STATE DEVICE

### Manufacture of Transparent Conductive Electrodes (TE)

Transparent conductive electrodes consisting of ITO (Indium Tin Oxide), deposited by reactive DC sputtering from an indium tin target, were deposited on float glass ($5x5cm^2$) under the following conditions:

| | |
|---|---|
| Initial pressure: | $10^{-5}$ mb |

(continued)

| | |
|---|---|
| Oxygen pressure: | $10^{-3}$ mb |
| Argon pressure: | 2.2 $10^{-3}$ mb |
| Total pressure: | 3.2 $10^{-3}$ mb |
| Power: | 400 W |
| Voltage: | 515 V |
| Sputtering time: | 10 min. |
| Annealing: | 450°C for 30 min. |

Properties of the films:

- thickness = 1600 A
- sheet resistance $R_o$ = 50 ohms
- optical transmission at 550 nm: 90%

**Preparation of First Inorganic Electrochromic Layer EC1**

$WO_3$ was prepared by reactive DC sputtering from a tungsten target under the following conditions:

| | |
|---|---|
| Initial pressure: | $10^{-5}$ mb |
| Oxygen pressure: | 8x$10^{-3}$ mb |
| Power: | 1000 W |
| Voltage: | 490 V |
| Sputtering time: | 50 min. |

The $WO_3$ films thereby obtained can be either directly used or electrochemically processed ("formated") in $H_2SO_4$, 1N solution prior to utilization. A three electrode cell configuration was used for this processing: the electrochromic material $EC_1$, a platinum counter electrode and a saturated calomel reference electrode (SCE). The electrochemical treatment consisted first of a cathodic polarization of $EC_1$ at 0.5 V vs. SCE for 120 seconds then followed by an anodic polarization at +0.5 V vs. SCE for 120 seconds. This cycle was repeated three times and the procedure was terminated with the anodic polarization. Finally, the films were rinsed in distilled water and then dried at room temperature.

The performances of both types of thin films (straight from sputtering and formated in $H_2SO_4$) are compared in the following table (transmission measurements were carried out at 550 nm).

| | Thickness (A) | Exchanged charge (mC/ cm2) | Transm. colored (%) | Transm. bleached (%) | Coloring time (min.) | Bleaching time (min.) |
|---|---|---|---|---|---|---|
| $WO_3$ (straight) | 3000 | 7 | 45 | 90 | 6 | 5 |
| $WO_3$ (formated) | 3000 | 10 | 35 | 90 | 4 | 3 |

**Preparation of Second Inorganic Electrochromic Layer (EC2)**

Two methods have been used:
electrochemical
physical
Electrochemical preparation involved three steps:

**1st step**:

The "original" layer was prepared by reactive DC sputtering from a nickel target under the following conditions:

| | | | |
|---|---|---|---|
| Initial pressure: | $10^{-5}$ mb | Power: | 300W |

(continued)

| | | | |
|---|---|---|---|
| Oxygen pressure: | $7.2x10^{-3}$ mb | Voltage: | 240V |
| Hydrogen pressure: | $0.4x10^{-3}$ mb | Sputtering time: | 60min. |
| Total pressure: | $7.6x10^{-3}$ mb | Film thickness: | 1100A |

This produced a thin film consisting of a mixture of NiO, $Ni(OH)_2$ and NiOOH.

**2nd step:**

After sputtering, the film was electrochemically processed in NaOH, 1N, in a manner similar to that described above for $WO_3$, but with an anodic polarization vs SCE for 2 min.

This yielded the formation of a layer of NiOOH and NiO. Once formated, the film was rinsed in distilled water, then dried at room temperature.

**3rd step:**

The final active material, namely $Li_xNi^{2+}{}_yNi^{3+}{}_{(2z-2y-x)/3}O_z$, was obtained after an electrochemical treatment performed in a dry box. The procedure utilized a two-electrode cell configuration, namely the Ni based film and a lithium electrode; both electrodes were immersed in $LiClO_4$(1M)propylene carbonate ($LiClO_4$ p.c.). The film was then polarized at 1.7 V vs Li for 60 min. to produce the above mentioned active material $Li_xNi^{2+}{}_yNi^{3+}{}_{(2z-2y-x)/3}O_z$.

**Physical preparation:**

Steps 1 and 2 above were replaced by reactive direct sputtering (RF) from a $Li_{0.3}$ $Ni_{0.7}$ 0 target having a 75 mm diameter.

**Target manufacturing:**

A mixture (powder) of 0.15 $Li_2CO_3$ + 0.7 NiO (molar proportion) was first heated in air at 1000°C for 8 hours, and then compacted at 50 tons for 10 mins. The material thereby obtained was finally sintered in air at 1000°C for 8 hours. The conditions for the reactive RF sputtering were the following:

| | | | |
|---|---|---|---|
| Initial pressure: | 10-5 mb | Voltage: | 200V |
| Oxygen pressure: | $2.5x10^{-2}$ mb | Sputtering time: | 120mn |
| Powder: | 30 W | Film thickness: | 1100A |

The thin film obtained by sputtering was then processed in $LiClO_4$ p.c. as the third step of the electrochemical method described above to produce the final $Li_xNi_{1-x}O$ material.

The performance of both types of Ni based thin films are compared in the following table (light transmission is measured at 550 nm).

| | Thickness (A) | Exchanged charge (mC/cm2) | Transm. colored (%) | Transm. bleached (%) | Coloring time (mn) | Bleaching time (mn) |
|---|---|---|---|---|---|---|
| Electrochemical preparation | 1100 | 6 | 45 | 90 | 30 | 20 |
| Physical preparation | 1100 | 12 | 20 | 75 | 3 | 2 |

**Preparation of the Solid Polymer Electrolyte (SPE):**

The solid polymer electrolyte was a "solid solution" of a lithium salt in a copolyether type polymer. The polymer was an ethylene oxide based terpolymer comprising the following units:

75% (Wt%) ethylene oxide (OE):

$$-(CH_2 - CH_2 - O)-$$

20% (Wt%) methyl glycidyl ether (MGE):

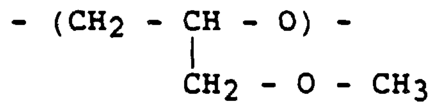

5% (Wt%) allyl glycidyl ether (AGE):

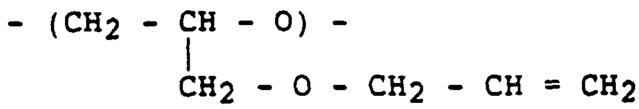

An equimolar mixture of $LiClO_4$ and $LiN(CF_3SO_2)_2$ salt was dissolved in the polymer (15% wt.) to form the solid polymer electrolyte. The incorporation of the salt into the polymer was operated in air by means of a co-solvent like acetonitrile ($CH_3CN$).

The above solution (polymer + salt in $CH_3CN$) was spread (by a doctor-blade technique) onto the two electrodes (electrochromic films) at a thickness of 200 microns.

To remove the solvent and obtain a layer of solid polymer electrolyte on each substrate, they were dried at 70°C under 12 bars pressure minimum (in air). Each SPE layer obtained was 20 microns thick.

## Assembly of the Complete Device

The two parts (glass + TE + EC) were then assembled together with the SPE interposed between, in a vacuum press (0.5 mb). Prior to assembling, however, the parts were heated separately at 80°C for 10 mins. and the air was removed out of the press chamber using a vacuum pump (0.5 mb). The parts were then pressed against each other at roughly 50 $Kg/in^2$ for 3 mins.

Finally, the device was sealed (in air) with a low vapor pressure resin in order to prevent the contamination by air and moisture.

## Performance of the Complete Device

A device prepared containing the electrochemically prepared Ni based material $EC_2$ was evaluated over a number of cycles. $EC_1$ was straight $WO_3$ obtained by DC sputtering. The polymer-salt combination utilized as the ion conducting layer was the terpolymer described above.

The characteristics of the device were the following:

surface area: 20 $cm^2$
working potential range ($WO_3$ vs Ni based $EC_2$): - 1.6 V for coloring; + 1.4 V for bleaching
charge ($Li^+$) exchanged: 5-6 $mC/cm^2$
number of cycles: over 2000
maximum transmission changes at 550 nm: 33% → 85%
times to achieve the transmission changes:

| | | | | | | |
|---|---|---|---|---|---|---|
| Transmission %: | 85 | 35 | 78 | 40 | 73 | 45 |
| Time (min.): | 5 | 12 | 3 | 7 | 2 | 4 |
| % of total transmission change: | | 100% | | 90% | | 80% |

## EXAMPLE 2

The preparation of this system was identical to that of Example 1 except that the solid polymer electrolyte was a polyurethane network made by reacting an aliphatic triisocyanate with an α-ω hydroxylated low molecular weight (Mw=10,000) copolymer comprising 75% ethylene oxide and 25% methyl glycidyl ether. The characteristics of this device were:

maximum transmission changes at 550 nm 35% → 83%
number of cycles: over 3,000
times to achieve the transmission changes:

| | | | | |
|---|---|---|---|---|
| Transmission %: | 83 | 35 | 76 | 38 |
| Time (min.): | 5 | 12 | 2 | 4 |
| % of total transmission change: | 100% | | 80% | |

## EXAMPLE 3

The preparation of this system was identical to that of Example 1, except for the nature of the electrolyte.

In this Example, the Ni based $EC_2$ was an "electrochemically prepared $EC_2$." The solid polymer electrolyte was a "solid solution" of a lithium salt in a copolyether type polymer. The polymer was an ethylene oxide based terpolymer comprised of:

75% (Wt%) ethylene oxide (OE)

$$-(CH_2\text{-}CH_2\text{-}O)-$$

20% (Wt%) butylene oxide (BO)

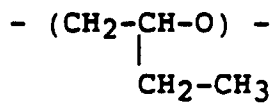

5% (Wt%) allylglycidyl ether (AGE)

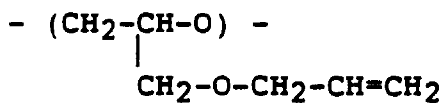

The lithium salt was Li $N(CF_3SO_2)_2$, incorporated in the polymer at 20% (wt.).

The characteristics of the devices were:

- surface area: $20 cm^2$
- working potential range: - 1.6 V for coloring
- + 1.4 V for bleaching
- charge ($Li^+$) exchanged: $5 mC/cm^2$
- number of cycles: over 300
- maximum transmission changes: 40% → 80%
- times to achieve the transmission changes:

| | | | | |
|---|---|---|---|---|
| Transmission %: | 80 | 40 | 65 | 33 |
| Time (min.): | 5 | 10 | 2 | 4 |
| % of total transmission change: | 100% | | 80% | |

## EXAMPLE 4

The preparation of this system was identical to that of Example 1 except for the transparent conductive electrodes, the Ni based $EC_2$ and the solid polymer electrolyte. In this Example, the Ni based $EC_2$ was an "electrochemically prepared $EC_2$." The transparent conductive electrodes were $SnO_2$:F (fluorine doped tin oxide) prepared by chemical vapor deposition. The solid polymer electrolyte was a "solid solution" of a lithium salt in a copolyether type polymer. The polymer was an ethylene oxide based copolymer comprised of:

75% (Wt %) ethylene oxide (OE)

$-(CH_2-CH_2-O)-$

25% (Wt %) butylene oxide (BO)

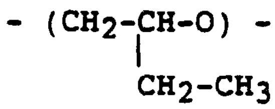

An equimolar mixture of $LiClO_4$ and $LiN(CF_3SO_2)_2$ salt was dissolved in the polymer (15% wt.) to form the solid polymer electrolyte.

The characteristics of the device were:

- surface area: $20 cm^2$
- working potential range: - 1.6 V for coloring
  + 1.4 V for bleaching
- charge ($Li^+$) exchanged: 5-6 $mC/cm^2$
- number of cycles: over 300
- maximum transmission changes: 37% → 83%
- times to achieve the transmission changes:

| | | | | |
|---|---|---|---|---|
| Transmission %: | 83 | 37 | 78 | 41 |
| Time (min.): | 5 | 11 | 2 | 4 |
| % of total transmission change: | 100% | | 80% | |

**EXAMPLE 5**

A Ni based thin film EC2 was prepared by R.F. sputtering with the following parameters:

| | |
|---|---|
| power: | 120W |
| initial pressure: | $10^{-7}$ mb |
| oxygen pressure: | $8x10^{-2}$ mb |
| total pressure: | $8x10^{-2}$ mb |
| sputtering time: | 30 min. |
| substrate: | float glass coated with $SnO_2$:F 2.5 x 2.5 $cm^2$ |
| thickness: | (at the edge of the substrate): 800 angstroms |

A film of solid polymer electrolyte (S.P.E.) was then deposited by in-situ crosslinkage, forming: glass/TE/EC2/SPE. A lithium foil was then applied to form the electrochemical cell:

glass/TE/EC2/SPE/Li/Copper.

This electrochemical cell was then cycled 50 times at voltages:

+1.5 volt for 500 seconds (insertion of $Li^+$ in EC2)

+3.5 volt for 300 seconds (extraction of $Li^+$ from EC2)

The charge exchanged is reported in the following table and compared to an identical sample cycled in a liquid electrolyte:

| Q ($mC/cm^2$) | cycle n°2 | cycle n°50 |
|---|---|---|
| Solid electrolyte | 26.0 | 22.0 |
| Liquid electrolyte | 24.8 | 12.4 |

After the 50 cycles, the copper/Li/SPE was removed by peeling and the glass/TE/EC2 was assembled in a final device with a $WO_3$ = EC1 electrode. This device was cycled according to the voltages:

$\Delta V = V_{EC\,1} - V_{EC2} = -0.6V$ for 85 seconds (coloration)
$\Delta V = +1.6$ volts for 45 seconds (decoloration)

and then exchanged 10.0 mC/cm$^2$ with a transmission change at $\lambda = 550$nm of 55% to 10%.

**EXAMPLE 6**

A chromium based EC2 film with the formula

$$M_x T^n_y T^{n+m}_{(uz-ny-x)/(n+m)} X^u_z$$

where:

M = Li
T = Cr
n = 3
m = 1 $\qquad Li_xCr^{III}_yCr^{IV}_{(4-3y-x)/4}O_2$
X = O
u = 2
z = 2

was prepared by R.F. sputtering of a target $LiCrO_2$ with the following parameters:

| | |
|---|---|
| Power: | 100W |
| Initial pressure: | $10^{-7}$mb |
| Argon pressure: | $6X10^{-3}$mb |
| Total pressure: | $6X10^{-3}$mb |
| Sputtering Time: | 35 minutes |
| Thickness: | 1250 A° |
| Substrate: | float glass coated with indium tin oxide. |

The film was then electrochemically processed in $LiClO_4$(1M) in propylene carbonate solvent. It was cycled 10 times at voltages:

1.2 volts vs Lithium for 300 seconds (insertion of $Li^+$)

3.5 volts for 600 seconds (extraction of $Li^+$)

with a corresponding transmission change from 71% to 91%. The exchanged charge was in the vicinity of 50 mC/cm$^2$. After drying and cleaning of the film, it was assembled in a complete device identical to Example 2 (polyurethane network) with a $WO_3$ EC1 electrode.

The device was cycled according to
$\Delta V = V_{EC1} - V_{EC2} = -0.8V$ for coloring for 380 seconds
$\Delta V = +1.4$ volts for bleaching (at 30°C)
with a charge exchanged of approximately 10 mC/cm$^2$ and a transmission change from 33% to 79% (at 550 nm). The number of cycles was over 4,000.

The electrochromic element of the present invention can be useful in applications such as for sun roofs of automobiles, architectural windows, aircraft windows, the rear windows of vans or trucks, or in sunglasses. The electrochromic element of the invention can be utilized to vary the amount of visible light transmitted through a substrate and also can be utilized to reduce the amount of radiant heat transmitted through windows. Alternatively, the electrochromic element of the invention can be utilized in a mirror to vary the percentage of reflected visible light which would be useful, for example, in an automobile rear view mirror.

It has also been found that the electrochromic element of the invention can be useful as a supercapacitor. Of course, the electrochromic properties of the element of the invention are not necessary in a supercapacitor. However, it has been found that a laminate consisting of an ion conducting layer of an electrolyte interposed between first and second inorganic electrochromic layers, all sandwiched between a pair of conductive substrates such as plastic sheets, having a thickness on the order of 200 microns, provides an element which is useful as a supercapacitor, having

favorable values of specific capacitance, specific energy, leakage current and thermal stability. Such a laminate utilizing an ion conducting layer of an electrolyte and first and second inorganic electrochromic layers in accordance with the invention is capable of providing a specific capacitance on the order of 1 Farad/$cm^3$.

Although the present invention has been described in connection with the preferred embodiments, it is understood that modifications and variations may be resorted to without departing from the scope of the invention as defined in the appended claims.

## Claims

1. An electrochromic element comprising a pair of conductive electrodes (12,14) at least one of which is transparent, first and second inorganic electrochromic layers (16,18) interposed between said pair of conductive electrodes and an ion conducting layer (20) of an electrolyte interposed between said first and second inorganic electrochromic layers, wherein said first and second inorganic electrochromic layers are different and are capable of exhibiting electrochromic properties upon the incorporation of at least one ion of an element selected from the group consisting of H, Li, Na, K, Ag, Cu and Tl, with said second inorganic electrochromic layer being amorphous and the electrochromic properties of said first and second inorganic electrochromic layers being complementary and wherein said ion conducting layer of an electrolyte is an amorphous solution of at least one ionizable salt of an element selected from the group consisting of H, Li, Na, K, Ag, Cu and Tl in a polymer material capable of conducting an amount of at least one ion of said element between said first and second inorganic electrochromic layers sufficient to cause each of said first and second inorganic electrochromic layers to exhibit a complementary color change, with said ion conducting layer remaining amorphous and transparent, **characterized in that** the polymer material of the ion conducting layer comprises either

   (i) a copolymer of ethylene oxide and at least one comonomer selected from methyl glycidyl ether, propylene oxide, butylene oxide and allyl glycidyl ether, or

   (ii) a polyurethane gel formed by reacting a triisocyanate with an $\alpha,\omega$-hydroxylated copolymer of ethylene oxide and at least one comonomer selected from methyl glycidyl ether, propylene oxide, butylene oxide and allyl glycidyl ether, said hydroxylated copolymer having a molecular weight ranging between 1,000 and 20,000.

2. The element of claim 1, wherein said first inorganic electrochromic layer is selected from $WO_3$, $MoO_3$ and $TiO_2$.

3. The element of claim 1 or 2 wherein said pair of conductive electrodes are fluorine doped tin oxide ($SnO_2$:F) or indium-tin oxide.

4. The element of any of claims 1 to 3 wherein said second inorganic electrochromic layer comprises a fourth period transition metal chalconide or halide having the property of exhibiting a color change when shifting between the +2 and +3 valence states or between the +3 and +4 valence states.

5. The element of claim 4, wherein said second inorganic electrochromic layer comprises the composition

$$M_xT^n_yT^{n+m}_{(uz-ny-x)/(n+m)}X^u_z$$

   wherein x, y, z, u $\geq$ 0, 2$\leq$n$\leq$3, 1$\leq$m$\leq$2, n+m$\leq$4; T is a fourth period transition element selected from Ni, Co, Mn, Cr, V, Ti or Fe; M is at least one element selected from H, Li, Na, K, Ag, Cu and Tl; X is selected from O, S, F and Cl; n, n+m and u are oxidation numbers; and x is the moles of $M^+$ ions incorporated into said second inorganic electrochromic layer, y is the moles of T at the oxidation number n and z is the moles of X.

6. The element of claim 5, wherein said second inorganic electrochromic layer is formed by sputtering a target of transition metal T with an $O_2/H_2$ plasma to form an original layer consisting essentially of a mixture of T0, $T(OH)_2$ and TOOH; electrochemically processing the original layer in alkali metal hydroxide solution to form a layer consisting essentially of TO and TOOH; and
   electrochemically processing the formated layer consisting essentially of TO and TOOH in a liquid electrolyte comprising a polar solvent selected from propylene carbonate and $(C_2H_5)_2NSO_2N(C_2H_5)_2$ and an ionizable salt MZ, wherein M is selected from H, Li, Na, K, Ag, Cu and Tl and Z is a strong acid anion selected from $ClO_4^-$, $CF_3SO_3^-$ and $N(CF_3SO_2)_2^-$, to form said second inorganic electrochromic layer having the composition $M_xT^n_yT^{n+m}_{(2z-ny-x)/(n+m)}O_z$.

**7.** The element of claim 5, wherein said second inorganic electrochromic layer is formed by sputtering a target of $M_{\alpha}T_{1-\alpha}O$, wherein $0<\alpha\leq1.0$, to form a thin film which comprises $M, T^{n}, T^{n+m}$ and 0, electrochemically processing the thin film in a liquid electrolyte comprising a polar solvent selected from propylene carbonate and $(C_2H_5)_2NSO_2H(C_2H_5)_2$ and an ionizable salt MZ, wherein M is selected from H, Li, Na, K, Ag, Cu and Tl and Z is a strong acid anion selected from $ClO_4^-$, $CF_3SO_3^-$ and $N(CF_3SO_2)_2^-$, to form said second inorganic electrochromic layer having the composition $M_xT^n_yT^{n+m}_{(2z-ny-x)/(n+m)}O_z$.

**8.** The element of claim 5, wherein the first inorganic electrochromic layer comprises $WO_3$ and $M^+$ ions are capable of being inserted from said ion conducting layer to said first inorganic electrochromic layer to form the composition $M_tWO_3$, which is colored, wherein $0\leq t\leq1$ and t is moles of M.

**9.** The element of claim 8, capable of exhibiting

a) a first color state wherein said second inorganic layer is bleached and has the composition $M_xT_y^nX_z^u$ and said first inorganic layer is bleached and has the composition $WO_3$, and
b) a second color state wherein said second inorganic layer is colored and has the composition $M_{x-\Delta x}T^{n}_{y-\Delta x/m}T^{n+m}_{\Delta x/m}X^{u}_{z}$ and said first inorganic layer is colored and has the composition $M_{\Delta x}WO_3$, said first color state having a maximum transmissivity and said second color state having a less than maximum transmissivity.

**10.** The element of claim 5, wherein X is 0.

**11.** The element of any of claims 5 to 10, wherein M is Li.

**12.** The element of claim 5, wherein said $M^+$ ions can be inserted into said second inorganic electrochromic layer by applying a voltage differential between said pair of conductive electrodes.

**13.** The element of claim 8, wherein said $M^+$ ions can be inserted into said first inorganic electrochromic layer by applying a voltage differential between said pair of conductive electrodes.

**14.** An electrochromic device comprising an electrochromic element according to any one of claims 1 to 13.

**15.** The device of claim 14 wherein the electrochromic element is interposed between a pair of transparent substrates.

**16.** The device of claim 15, wherein said transparent substrates are glass or plastic.

**17.** The device of claim 14 wherein the electrochromic element is interposed between a pair of substrates, and has a reflective and a transparent conductive electrode, and the electrochromic device is an electrochromic mirror.

**18.** The device of claim 14 comprising a plurality of electrochromic elements disposed in juxtaposed surface to surface relation and having a transparent substrate interposed between any two consecutive electrochromic elements, said plurality of electrochromic elements being interposed between a pair of transparent substrates.

**19.** The device of claim 14 comprising a first electrochromic element having two transparent conductive electrodes, and a second electrochromic element having one transparent conductive electrode and one electrode which may be transparent or reflective; said first and second electrochromic elements being disposed in juxtaposed surface to surface relation and having an intermediate transparent substrate interposed between them so that the amorphous inorganic electrochromic layer of each of the electrochromic elements is separated from the intermediate transparent substrate by a transparent conductive electrode of said element.

**20.** The device of claim 19, wherein said first and second electrochromic elements with the intermediate transparent substrate therebetween are interposed between a first and a second transparent substrate.

**21.** A method of manufacturing the electrochromic device of claim 15, wherein the electrochromic element interposed between the pair of transparent substrates is produced by:

sputtering a layer of the conductive electrode material on one of the substrates;
sputtering a layer of the first inorganic electrochromic material onto said conductive electrode layer on said one of said substrates;

sputtering a layer of the conductive material onto the other substrate;
sputtering a layer of an amorphous inorganic electrochromic material onto said conductive electrode layer on said other substrate; and
assembling a layer of the ion conducting solid polymeric electrolyte between the sputtered sides of said substrates.

**22.** The method of claim 21, wherein at least one of said amorphous inorganic electrochromic material and said first inorganic electrochromic material is electrochemically processed prior to asembling the polymeric electrolyte layer between the sputtered sides of said substrates.

**23.** A method of manufacturing the electrochromic device of claim 20 wherein the electrochromic elements are produced by:

sputtering a layer of the conductive electrode material onto the first substrate;
sputtering a layer of the first inorganic electrochromic material onto said conductive electrode layer on the first substrate;
sputtering a layer of the conductive electrode material onto the second substrate;
sputtering a layer of the first inorganic electrochromic material onto said conductive electrode layer on said second substrate;
sputtering a layer of the conductive electrode material on both sides of the intermediate substrate;
sputtering a layer of the amorphous inorganic electrochromic material on each of the conductive electrode layers formed on each side of the intermediate substrate;
assembling the sputtered side of the first substrate into juxtaposed contact with one sputtered side of the intermediate substrate by using a layer of the polymeric electrolyte interposed therebetween; and
assembling the sputtered side of the second substrate into juxtaposed contact with the other sputtered side of the intermediate substrate by using a layer of the polymeric electrolyte interposed therebetween.

**24.** The method of claim 23, wherein at least one of said amorphous inorganic electrochromic material and said first inorganic electrochromic material is electrochemically processed prior to the assembling steps.

**Patentansprüche**

**1.** Elektrochromes Element, umfassend ein Paar leitfähiger Elektroden (12, 14), von denen wenigstens eine transparent ist, erste und zweite anorganische elektrochrome Schichten (16, 18), die zwischen dem Paar leitfähiger Elektroden angeordnet sind, und eine Ionen-leitende Schicht (20) eines Elektrolyten, die zwischen der ersten und der zweiten anorganischen elektrochromen Schicht angeordnet ist, worin die erste und die zweite anorganische elektrochrome Schicht voneinander verschieden sind und elektrochrome Eigenschaften beim Einbau wenigstens eines Ions eines Elements, das aus der aus H, Li, Na, K, Ag, Cu und Tl bestehenden Gruppe gewählt ist, zeigen können, wobei die zweite anorganische elektrochrome Schicht amorph ist und die elektrochromen Eigenschaften der ersten und der zweiten anorganischen elektrochromen Schicht komplementär zueinander sind und worin die Ionen-leitende Schicht eines Elektrolyten eine amorphe Lösung wenigstens eines ionisierbaren Salzes eines Elements ist, das aus der aus H, Li, Na, K, Ag, Cu und Tl bestehenden Gruppe gewählt ist, in einem Polymermaterial, das eine Menge wenigstens eines Ions des Elements zwischen der ersten und der zweiten anorganischen elektrochromen Schicht in einer Weise leiten kann, die ausreichend dafür ist, dafür zu sorgen, daß jede der beiden ersten und zweiten anorganischen elektrochromen Schichten eine komplementäre Farbänderung zeigt, wobei die Ionen-leitende Schicht amorph und transparent bleibt, dadurch gekennzeichnet, daß das Polymermaterial der Ionen-leitenden Schicht umfaßt: entweder

(i) ein Copolymer aus Ethylenoxid und wenigstens einem Comonomer, das gewählt ist aus Methylglycidylether, Propylenoxid, Butylenoxid und Allylglycidylether; oder
(ii) ein Polyurethan-Gel, das gebildet wird durch Umsetzen eines Triisocyanats mit einem $\alpha,\omega$-hydroxylierten Copolymer aus Ethylenoxid und wenigstens einem Comonomer, das gewählt ist aus Methylglycidylether, Propylenoxid, Butylenoxid und Allylglycidylether, wobei das hydroxylierte Copolymer ein Molekulargewicht im Bereich zwischen 1.000 und 20.000 aufweist.

**2.** Element nach Anspruch 1, worin die erste anorganische elekrochrome Schicht gewählt ist aus $WO_3$, $MoO_3$ und $TiO_2$.

3. Element nach Anspruch 1 oder 2, worin das Paar leitfähiger Elektroden aus mit Fluor dotiertem Zinnoxid ($SnO_2$ : F) oder aus Indium-Zinn-Oxid besteht.

4. Element nach einem der Ansprüche 1 bis 3, worin die zweite anorganische elektrochrome Schicht ein Chalcogenid oder Halogenid eines Übergangsmetalls der vierten Periode des Periodensystems der Elemente umfaßt, das die Eigenschaft aufweist, eine Farbänderung zu zeigen, wenn eine Verschiebung zwischen dem Valenzzustand +2 und dem Valenzzustand +3 oder eine Verschiebung zwischen dem Valenzzustand +3 und dem Valenzzustand +4 erfolgt.

5. Element nach Anspruch 4, worin die zweite anorganische elektrochrome Schicht die Zubereitung

$$M_xT^n{}_yT^{n+m}{}_{(uz-ny-x)/(n+m)}X^u{}_z$$

umfaßt, worin x, y, z, u ≥ 0 sind; die Beziehungen 2≤n≤3, 1≤m≤2 und n+m≤4 gelten; T ein Übergangselement der vierten Periode ist, das gewählt ist aus Ni, Co, Mn, Cr, V, Ti oder Fe; M für wenigstens ein Element steht, gewählt ist aus H, Li, Na, K, Ag, Cu und Tl; X gewählt ist aus O, S, F und Cl; n, n+m und u Oxidationszahlen sind und x für die Zahl der Mole an $M^+$-Ionen steht, die in die zweite anorganische elektrochrome Schicht eingebaut sind, y für die Zahl der Mole von T mit der Oxidationszahl n steht und z die Zahl der Mole von X steht.

6. Element nach Anspruch 5, worin die zweite anorganische elektrochrome Schicht gebildet wird durch Sputtern eines Targets eines Übergangsmetalls T mit einem $O_2/H_2$-Plasma unter Bildung einer Ursprungsschicht, die im wesentlichen aus einer Mischung aus TO, $T(OH)_2$ und TOOH besteht, elekrochemisches Bearbeiten der Ursprungsschicht in einer Alkalimetall- hydroxid-Lösung unter Bildung einer Schicht, die im wesentlichen aus TO und TOOH besteht, und elektrochemisches Bearbeiten der so gebildeten, im wesentlichen aus TO und TOOH bestehenden Schicht in einem flüssigen Elektrolyten, der ein polares Lösungsmittel, das gewählt ist aus Propylencarbonat und $(C_2H_5)_2NSO_2N(C_2H_5)_2$, und ein ionisierbares Salz MZ umfaßt, worin M gewählt ist aus H, Li, Na, K, Ag, Cu und Tl und Z das Anion einer starken Säure ist, die gewählt ist aus $ClO_4^-$, $CF_3SO_3^-$ und $N(CF_3SO_2)_2^-$, unter Bildung der zweiten anorganischen elektrochromen Schicht, die die Zusammensetzung $M_xT^n{}_yT^{n+m}{}_{(2z-ny-x)/(n+m)}O_z$ aufweist.

7. Element nach Anspruch 5, worin die zweite anorganische elektrochrome Schicht gebildet wird durch Sputtern eines Targets aus $M_\alpha T_{1-\alpha}O$, worin die Beziehung 0≤α≤1,0 gilt, unter Bildung eines dünnen Films, der M, $T^n$, $T^{n+m}$ und O umfaßt, und elektrochemisches Bearbeiten des dünnen Films in einem flüssigen Elektrolyten, der ein polares Lösungsmittel, das gewählt ist aus Propylencarbonat und $(C_2H_5)_2NSO_2H(C_2H_5)_2$, und ein ionisierbares Salz MZ umfaßt, worin M gewählt ist aus H, Li, Na, K, Ag, Cu und Tl und Z ein Anion einer starken Säure ist, die gewählt ist aus $ClO_4^-$, $CF_3SO_3^-$ und $N(CF_3SO_2)_2^-$, unter Bildung der zweiten anorganischen elektrochromen Schicht, die die Zusammensetzung $M_xT^n{}_yT^{n+m}{}_{(2z-ny-x)/(n+m)}O_z$ umfaßt.

8. Element nach Anspruch 5, worin die erste anorganische elektrochrome Schicht $WO_3$ umfaßt und die $M^+$-Ionen aus der Ionen-leitenden Schicht in die erste anorganische elektrochrome Schicht unter Bildung der Zusammensetzung $M_tWO_3$ eingeführt werden können, die gefärbt ist, worin die Beziehung 0≤t≤1 gilt und t die Zahl der Mole von M ist.

9. Element nach Anspruch 8, das in der Lage ist, zu zeigen:

(a) einen ersten Farbzustand, in dem die zweite anorganische Schicht gebleicht wird und die Zusammensetzung $M_xT^n{}_yX^u{}_z$ aufweist und die erste anorganische Schicht gebleicht wird und die Zusammensetzung $WO_3$ aufweist; und
(b) einen zweiten Farbzustand, in dem die zweite anorganische Schicht gefärbt wird und die Zusammensetzung $M_{x-\Delta x}T^n{}_{y-\Delta x/m}T^{n+m}{}_{\Delta x/m}X^u{}_z$ aufweist und die erste anorganische Schicht gefärbt ist und die Zusammensetzung $M_{\Delta x}WO_3$ aufweist,

wobei der erste Farbzustand eine maximale spezifische Durchlässigkeit aufweist und der zweite Farbzustand eine geringere Durchlässigkeit als die maximale spezifische Durchlässigkeit aufweist.

10. Element nach Anspruch 5, worin X für O steht.

11. Element nach einem der Ansprüche 5 bis 10, worin M für Li steht.

12. Element nach Anspruch 5, worin die $M^+$-Ionen in die zweite anorganische elektrochrome Schicht eingebaut werden können, indem man einen Spannungsunterschied zwischen dem Paar leitfähiger Elektroden anlegt.

13. Element nach Anspruch 8, worin die $M^+$-Ionen in die erste anorganische elektrochrome Schicht eingebaut werden können, indem man einen Spannungsunterschied zwischen dem Paar leitfähiger Elektroden anlegt.

14. Elektrochrome Vorrichtung, umfassend ein elektrochromes Element nach einem der Ansprüche 1 bis 13.

15. Vorrichtung nach Anspruch 14, worin das elektrochrome Element zwischen einem Paar transparenter Substrate angeordnet ist.

16. Vorrichtung nach Anspruch 15, worin die transparenten Substrate aus Glas oder Kunststoff bestehen.

17. Vorrichtung nach Anspruch 14, worin das elektrochrome Element zwischen einem Paar Substraten angeordnet ist und eine reflektierende und eine transparente leitfähige Elektrode aufweist und worin die elektrochrome Vorrichtung ein elektrochromer Spiegel ist.

18. Vorrichtung nach Anspruch 14, umfassend eine Mehrzahl elektrochromer Elemente, die in einer Stellung Oberfläche zu Oberfläche nebeneinander liegend angeordnet sind und ein transparentes Substrat zwischen zwei aufeinanderfolgenden elektrochromen Elementen angeordnet aufweisen, wobei die Mehrzahl der elektrochromen Elemente zwischen einem Paar transparenter Substrate angeordnet ist.

19. Vorrichtung nach Anspruch 14, umfassend ein erstes elektrochromes Element, das zwei transparente leitfähige Elektroden aufweist, und ein zweites elektrochromes Element, das eine transparente leitfähige Elektrode und eine Elektrode aufweist, die transparent oder reflektierend sein kann, wobei das erste und das zweite elektrochrome Element in einer Stellung Oberfläche zu Oberfläche nebeneinanderliegend angeordnet sind und ein transparentes Zwischensubstrat zwischen ihnen angeordnet aufweisen, so daß die amorphe anorganische elektrochrome Schicht jedes der elektrochromen Elemente von dem transparenten Zwischensubstrat durch eine transparente leitfähige Elektrode des Elements getrennt ist.

20. Vorrichtung nach Anspruch 19, worin das erste und das zweite elektrochrome Element mit dem dazwischen liegend angeordneten transparenten Zwischensubstrat zwischen einem ersten und einem zweiten transparenten Substrat angeordnet sind.

21. Verfahren zur Herstellung der elektrochromen Vorrichtung nach Anspruch 15, wodurch das zwischen dem Paar transparenter Substrate angeordnete elektrochrome Element hergestellt wird durch

- Sputtern einer Schicht des Materials der leitfähigen Elektrode auf eines der Substrate;
- Sputtern einer Schicht des ersten anorganischen elektrochromen Materials auf die leitfähige Elektrodenschicht auf einem der Substrate;
- Sputtern einer Schicht des leitfähigen Materials auf das andere Substrat;
- Sputtern einer Schicht eines amorphen anorganischen elektrochromen Materials auf die leitfähige Elektrodenschicht auf dem anderen Substrat; und
- Anordnen einer Schicht des Ionen-leitenden festen Polymer-Elektrolyten zwischen den mit aufgesputterten Schichten versehenen Seiten der Substrate.

22. Verfahren nach Anspruch 21, worin wenigstens eines der Materialien amorphes anorganisches elektrochromes Material und erstes anorganisches elektrochromes Material vor dem Aufbringen der Polymer-Elektrolytschicht zwischen den mit aufgesputterten Schichten versehenen Seiten der Substrate elektrochemisch behandelt wird.

23. Verfahren zur Herstellung der elektrochromen Vorrichtung nach Anspruch 20, worin die elektrochromen Elemente hergestellt werden durch die Schritte:

- Aufsputtern einer Schicht des Materials der leitfähigen Elektrode auf das erste Substrat;
- Aufsputtern einer Schicht des ersten anorganischen elektrochromen Materials auf die leitfähige Elektrodenschicht auf dem ersten Substrat;
- Aufsputtern einer Schicht des Materials der leitfähigen Elektrode auf das zweite Substrat;
- Aufsputtern einer Schicht des ersten anorganischen elektrochromen Materials auf die leitfähige Elektrodenschicht auf dem zweiten Substrat;

- Aufsputtern einer Schicht des Materials der leitfähigen Elektrode auf beide Seiten des Zwischensubstrats;
- Aufsputtern einer Schicht des amorphen anorganischen elektrochromen Materials auf jede der leitfähigen Elektrodenschichten, die auf jeder Seite des Zwischensubstrats gebildet sind;
- Bringen der mit Sputter-Schichten versehenen Seite des ersten Substrats in nebeneinander liegenden Kontakt mit einer mit Sputter-Schichten versehenen Seite des Zwischensubstrats unter Verwendung einer Schicht des Polymer-Elektrolyten, die dazwischen angeordnet ist; und
- Bringen der mit Sputter-Schichten versehenen Seite des zweiten Substrats in nebeneinander liegenden Kontakt mit der anderen, mit Sputter-Schichten versehenen Seite des Zwischensubstrats unter Verwendung einer Schicht des Polymer-Elektrolyten, die dazwischen angeordnet ist.

**24.** Verfahren nach Anspruch 23, worin wenigstens eines der Materialien amorphes anorganisches elektrochromes Material und erstes anorganisches elektrochromes Material vor den Schritten des In-Kontakt-Bringens elektrochemisch behandelt wird.

**Revendications**

**1.** Un élément électrochromique comportant une paire d'électrodes conductrices (12, 14) dont au moins l'une est transparente, des première et seconde couches inorganiques électrochromiques (16, 18) qui sont interposées entre ladite paire d'électrodes conductrices et une couche conductrice d'ions (20) d'un électrolyte interposé entre lesdites première et seconde couches inorganiques électrochromiques, dans lequel lesdites première et seconde couches inorganiques électrochromiques sont différentes et sont susceptibles de présenter des propriétés électrochromiques après l'incorporation d'au moins un ion d'un élément choisi dans le groupe constitué de H, Li, Na, K, Ag, Cu et Tl, ladite seconde couche inorganique électrochromique étant amorphe tandis que les propriétés électrochromiques desdites première et seconde couches inorganiques électrochromiques sont complémentaires, et dans lequel ladite couche conductrice d'ions d'un électrolyte est une solution amorphe d'au moins un sel ionisable d'un élément choisi dans le groupe constitué de H, Li, Na, K, Ag, Cu et Tl dans un matériau polymère apte à conduire une quantité d'au moins un ions dudit élément entre lesdites première et seconde couches inorganiques électrochromiques, suffisante pour amener chacune desdites première et seconde couches inorganiques électrochromiques à présenter un changement de couleur complémentaire, ladite couche conductrice d'ion restant amorphe et transparente,
caractérisé en ce que
le matériau polymère de la couche conductrice d'ion comporte :

(i) un copolymère d'oxyde d'éthylène et au moins un comonomère choisi parmi l'éther méthylglycidylique, l'oxyde de propylène, l'oxyde de butylène et l'éther allyl-glycidylique, ou bien

(ii) un gel de polyuréthane, réalisé en faisant réagir un triisocyanate avec un copolymère $\alpha,\omega$-hydroxylé d'oxyde d'éthylène et d'au moins un comonomère choisi parmi l'éther méthylglycidylique, l'oxyde de propylène, l'oxyde de butylène et l'éther allylglycidylique, ce copolymère hydroxylé présentant un poids moléculaire se situant dans la gamme de 1000 à 20.000.

**2.** L'élément de la revendication 1, dans lequel ladite première couche inorganique électrochromique est choisi parmi $WO_3$, $MoO_3$ et $TiO_2$.

**3.** L'élément de la revendication 1 ou 2, dans lequel ladite paire d'électrodes conductrices sont en oxyde d'indium-étain ou en oxyde d'étain dopé au fluor ($SnO_2$:F).

**4.** L'élément de l'une quelconque des revendications 1 à 3, dans lequel ladite seconde couche inorganique électrochromique comporte un chalconure ou un halogénure d'un métal de transition de la quatrième période, qui possède la propriété de présenter un changement de couleur lors d'un déplacement entre les états de valence +2 et +3 ou entre les états de valence +3 et +4.

**5.** L'élément de la revendication 4, dans lequel ladite seconde couche inorganique électrochromique comporte la composition :

$$M_x T^n_y T^{n+m}_{(uz-ny-x)/(n+m)} X^u_z$$

dans laquelle x, y, z, u ≥ 0,2≤n≤3, 1≤m≤2, n+m≤4 ; T est un élément de transition de la quatrième période choisi parmi Ni, Co, Mn, Cr, V, Ti ou Fe ; M est au moins un élément choisi parmi H, Li, Na, K, Ag, Cu et Tl ; X est choisi parmi O, S, F et Cl ; n, n+m et u sont des indices d'oxydation ; et x représente les moles des ions $M^+$ incorporés dans ladite seconde couche inorganique électrochromique, tandis que y représente les moles de T pour l'indice d'oxydation n et z représente les moles de X.

6. L'élément de la revendication 5, dans lequel ladite seconde couche inorganique électrochromique est formée en pulvérisant une cible de métal de transition T avec un plasma $O_2/H_2$ afin de former une couche originale, qui est constituée essentiellement d'un mélange TO, $T(OH)_2$ et TOOH ; en traitant par voie électrochimique la couche originale dans une solution d'hydroxyde de métal alcalin afin de former une couche constituée essentiellement de TO et de TOOH ; après quoi on traite par voie électrochimique la couche formée constituée essentiellement de TO et de TOOH dans un électrolyte liquide comportant un solvant polaire choisi parmi le carbonate de propylène et $(C_2H_5)_2NSO_2N(C_2H_5)_2$ et un sel ionisable MZ, dans lequel M est choisi parmi H, Li, Na, K, Ag, Cu et Tl tandis que Z est un anion d'acide fort choisi parmi $ClO_4^-$, $CF_3SO_3^-$ et $N(CF_3SO_2)_2^-$, afin de former ladite seconde couche inorganique électrochromique présentant la composition :

$$M_xT^n_yT^{n+m}_{(2z-ny-x)/(n+m)}O_z$$

7. L'élément de la revendication 5, dans lequel ladite seconde couche inorganique électrochromique est formée en pulvérisant une cible de $M_\alpha T_{1-\alpha}O$, où $O<\alpha\leq 1.0$, afin de former un film mince qui comporte M, $T^n$, $T^{n+m}$ et O, en traitant par voie électrochimique le film mince dans un électrolyte liquide, comportant un solvant polaire choisi parmi le carbonate de propylène et $(C_2H_5)_2NSO_2H(C_2H_5)_2$ et un sel ionisable MZ, dans lequel M est choisi parmi H, Li, Na, K, Ag, Cu et Tl tandis que Z est un anion d'acide fort choisi parmi $ClO_4^-$, $CF_3SO_3^-$ et $N(CF_3SO_2)_2^-$, afin de former ladite seconde couche inorganique électrochromique présentant la composition:

$$M_xT^n_yT^{n+m}_{(2z-ny-x)/(n+m)}O_z$$

8. L'élément de la revendication 5, dans lequel la première couche inorganique électrochromique comporte $WO_3$ et des ions $M^+$ sont susceptibles d'être insérés à partir de la couche conductrice d'ion dans ladite première couche inorganique électrochromique afin de former la composition $M_tWO_3$, qui est colorée, où $O\leq t\leq 1$ et t représente les moles de M.

9. L'élément de la revendication 8, apte à présenter :

a) un premier état de couleur, dans lequel ladite seconde couche inorganique est décolorée et présente la composition $M_xT_y^nX_z^u$ tandis que la première couche inorganique est décolorée et présente la composition $WO_3$, et
b) un second état de couleur, dans lequel ladite seconde couche inorganique et colorée et présente la composition : $M_{x-\Delta}xT^n_{y-\Delta}x/mT^{n+n}_{\Delta x/m}X^u_z$ tandis que la première couche inorganique est colorée et présente la composition : $M_{\Delta x}WO_3$,

ledit premier état de couleur présentant un pouvoir de transmission maximale tandis que le second état de couleur présente un pouvoir de transmission inférieur au pouvoir de transmission maximal.

10. L'élément de la revendication 5, dans lequel X est O.

11. L'élément de l'une quelconque des revendications 5 à 10, dans lequel M est Li.

12. L'élément de la revendication 5, dans lequel lesdits ions $M^+$ peuvent être insérés dans ladite seconde couche inorganique électrochromique en appliquant une tension différentielle entre ladite paire d'électrodes conductrices.

13. L'élément de la revendication 8, dans lequel lesdits ions $M^+$ peuvent être insérés dans ladite première couche inorganique électrochromique par application d'une tension différentielle entre ladite paire d'électrodes conductrices.

14. Le dispositif électrochromique comportant un élément électrochromique selon l'une quelconque des revendications 1 à 13.

15. Le dispositif de la revendication 14, dans lequel l'élément électrochromique est interposé entre une paire de substrats transparents.

16. Le dispositif de la revendication 15, dans lequel lesdits substrats transparents sont en verre ou en matière plastique.

17. Le dispositif de la revendication 14, dans lequel l'élément électrochromique est interposé entre une paire de substrats, et possède une électrode réfléchissante et une électrode transparente conductrice, le dispositif électrochromique étant un miroir électrochromique.

18. Le dispositif de la revendication 14, comportant une pluralité d'éléments électrochromiques disposés en relation juxtaposée de surface à surface et comportant un substrat transparent interposé entre deux éléments électrochromiques consécutifs, quelconque, cette pluralité d'éléments électro-chromiques étant interposée entre une paire de substrats transparents .

19. Le dispositif de la revendication 14, comportant un premier élément électrochromique ayant deux électrodes transparentes conductrices, et un second élément électrochromique ayant une électrode conductrice transparente et une électrode qui peut être transparente ou réfléchissante ; lesdits premier et second éléments électrochromiques étant disposés en relation juxtaposée de surface à surface et comportant un substrat transparent intermédiaire interposé entre elles, de sorte que la couche amorphe inorganique électrochromique de chacun des éléments électrochromiques est séparé du substrat intermédiaire transparent par une électrode transparente conductrice dudit élément.

20. Le dispositif de la revendication 19, dans lequel lesdits premier et second éléments électrochromiques comportant entre eux le substrat transparent intermédiaire, sont interposés entre un premier et un second substrats transparents.

21. Un procédé de fabrication du dispositif électrochromique de la revendication 15, dans lequel l'élément électrochromique interposé entre la paire de substrats transparents est préparé par :

pulvérisation d'une couche d'un matériau constitutif de l'électrode conductrice sur un des substrats ;

pulvérisation d'une couche dudit premier matériau inorganique électrochromique sur ladite couche de l'électrode conductrice sur un desdits substrats ;

pulvérisation d'une couche d'un matériau conducteur sur l'autre substrat ;

pulvérisation d'une couche de matériau amorphe inorganique électrochromique sur ladite couche de l'électrode conductrice de l'autre substrat ; et

assemblage d'une couche de l'électrolyte polymère solide, conducteur d'ion, entre les faces ayant subi une pulvérisation desdits substrats.

22. Le procédé de la revendication 21, dans lequel au moins un parmi ledit matériau amorphe inorganique électrochromique et ledit premier matériau inorganique électrochromique est traité par voie électrochimique avant l'assemblage de la couche d'électrolyte polymère entre les faces ayant subi une pulvérisation desdits substrats.

23. Un procédé pour fabriquer le dispositif électrochromique de la revendication 20, dans lequel les éléments électrochromiques sont préparés par :

pulvérisation d'une couche du matériau de l'électrode conductrice sur le premier substrat;

pulvérisation d'une couche dudit premier matériau inorganique électrochromique sur la couche de l'électrode conductrice sur le premier substrat ;

pulvérisation d'une couche du matériau de l'électrode conductrice sur le second substrat ;

pulvérisation d'une couche de premier matériau inorganique électrochromique sur ladite couche d'électrode conductrice sur ledit second substrat ;

pulvérisation d'une couche de matériau de l'électrode conductrice sur les deux faces du substrat intermédiaire ;

pulvérisation d'une couche de matériau amorphe inorganique électrochromique sur chacune des couches d'électrode conductrice formée sur chaque face du substrat intermédiaire ;

assemblage de la face ayant subi une pulvérisation du premier substrat en contact juxtaposé avec une face ayant subi une pulvérisation du substrat intermédiaire en utilisant une couche de l'électrolyte polymère interposée entre elles ; et

assemblage de la face ayant subi une pulvérisation du second substrat en contact juxtaposé avec l'autre face ayant subi une pulvérisation du substrat intermédiaire en utilisant une couche de l'électrolyte polymère interposée entre elles.

**24.** Le procédé de la revendication 23, dans lequel au moins un parmi ledit matériau amorphe inorganique électrochromique et ledit premier matériau inorganique électrochromique est traité par voie électrochimique avant les étapes d'assemblage.

FIG. 1

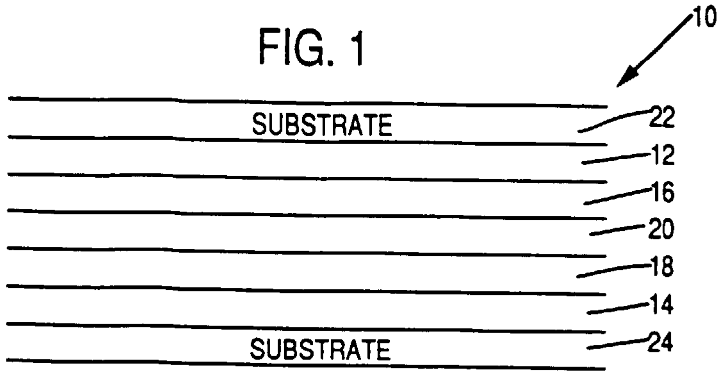
10
SUBSTRATE
22
12
16
20
18
14
SUBSTRATE
24

FIG. 2

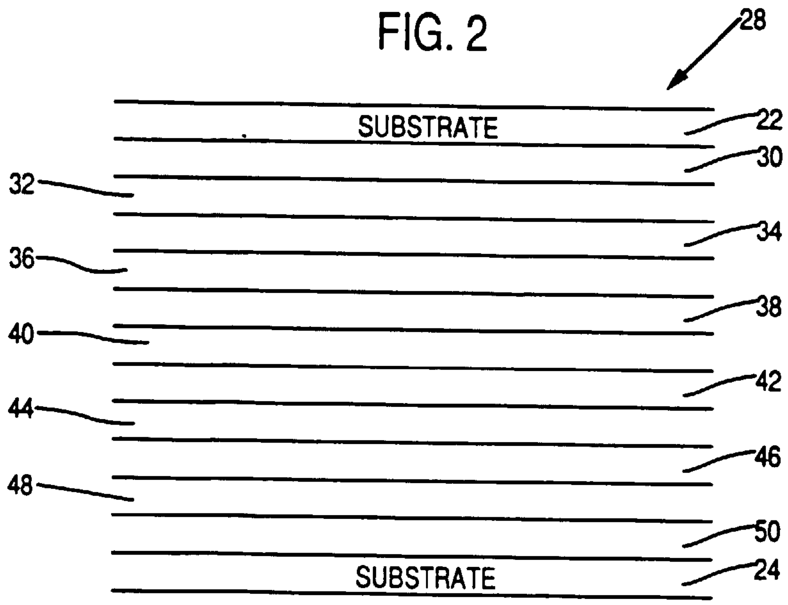
28
SUBSTRATE
22
30
32
34
36
38
40
42
44
46
48
50
SUBSTRATE
24